# EUROPÄISCHE PATENTANMELDUNG

(11) **EP 1 816 411 A2**
(43) Veröffentlichungstag der Anmeldung: **08.08.2007**
(21) Anmeldenummer: 07002123.3
(22) Anmeldetag: 31.01.2007
(51) Int. Cl.: F24H 3/04

(54) **Raumheizvorrichtung für einen Caravan**

(30) Priorität: 02.02.2006 GB 0602061
(71) Anmelder: Truma Gerätetechnik GmbH & Co. KG, 85640 Putzbrunn (DE)
(72) Erfinder: Gärtner, Peter, 86932 Pürgen (DE); Laging, Johannes, 80796 München (DE); Scheiber, Jürgen, 81825 München (DE); Brunnhuber, Hans-Georg, 83627 Wangau (DE)
(74) Vertreter: Müller - Hoffmann & Partner

(57) **Zusammenfassung**

Eine Raumheizvorrichtung für einen Caravan weist eine Heizeinrichtung (30) und ein Gebläse (80; 104) auf, wobei das Gebläse (80; 104) zum Ausblasen von Warmluft durch Auslässe (22; 90) dient, die an der Vorderseite und an der Rückseite des Raumheizgeräts vorgesehen sind. Durch den Auslass (22) an der Vorderseite ist ein direktes Zuführen von Warmluft ohne lange Leitungswege in den zu beheizenden Raum möglich.

## Beschreibung

Die Erfindung betrifft eine Heizvorrichtung, insbesondere eine Raumheizvorrichtung für Freizeitmobile wie Caravans, Wohnwagen oder Reisemobile.

Caravans, Reisemobile, Wohnwagen u. Ä. - nachfolgend zusammenfassend als Caravans bezeichnet - sind üblicherweise mit Heizvorrichtungen, wie z. B. Raumheizungen und Wasserheizungen ausgestattet. Raumheizvorrichtungen dienen zum Bereitstellen von Warmluft für Wohnräume, während Wasserheizungen zum Bereiten von Warmwasser für Küchen und Badezimmer dienen. Beide Heizungsarten können mit einer doppelten Heizquelle ausgestattet sein, meist in Form eines Gasbrenners und eines elektrischen Heizelements, so dass das Innere des Caravans auf verschiedene Weise, in Abhängigkeit von der zur Verfügung stehenden Energie, beheizt werden kann. Gasbrenner werden üblicherweise durch Flüssiggas gespeist, während elektrische Heizelemente Strom aus dem öffentlichen Netz oder von einem tragbaren Generator beziehen. Der Gasbrenner und das elektrische Heizelement können alternativ oder auch gleichzeitig genutzt werden.

Eine derartige Raumheizvorrichtung ist in der EP 0 936 420 A2 gezeigt und weist einen Gas-betriebenen Brenner mit einem Hauptwärmetauscher sowie ein elektrisches Heizelement als Hilfsheizung auf. Ein elektrisches Gebläse ist vorgesehen, um Luft, die durch den Wärmetauscher und/oder das elektrische Heizelement erwärmt wurde, durch Auslässe auszublasen, die auf der Rückseite des Heizgeräts vorgesehen sind. Die erwärmte Luft gelangt dann durch Leitungen zu Auslässen, die in verschiedenen Wohnbereichen eines Caravans angeordnet sind, um diese Bereiche zu erwärmen. Auf diese Weise kann die Warmluft in die Küche und in den Badbereich des Caravans, aber auch in den Hauptwohnbereich geführt werden.

Der Erfindung liegt die Aufgabe zugrunde, eine Raumheizvorrichtung für einen Caravan anzugeben, mit der eine verbesserte Aufheizung der Räume möglich ist.

Die Aufgabe wird erfindungsgemäß durch eine Raumheizvorrichtung nach Anspruch 1 gelöst. Vorteilhafte Ausgestaltungen sind in den abhängigen Ansprüchen angegeben.

Erfindungsgemäß ist eine Raumheizvorrichtung für einen Caravan angegeben, mit einer Heizeinrichtung und einem Gebläse, wobei das Gebläse zum Ausblasen von Warmluft durch Auslässe dient, die an der Vorderseite und an der Rückseite des Raumheizgeräts vorgesehen sind.

Während es im Stand der Technik bekannt ist, an der Rückseite Warmluftauslässe vorzusehen, über die Warmluft in Rohrleitungen ausgeblasen werden kann, die die Warmluft zu den jeweils zu erwärmenden Stellen führt, ermöglicht es die erfindungsgemäße Raumheizvorrichtung, zusätzlich Warmluft direkt auch an der Vorderseite der Vorrichtung unmittelbar auszublasen. Dadurch kann der Raum in der Nähe der Vorrichtung besonders schnell und effektiv beheizt werden. Da die Raumheizvorrichtung meist an zentraler Stelle in einem Caravan angeordnet ist, ist somit eine schnelle Erwärmung des gesamten Caravans möglich.

Die Raumheizvorrichtung kann einen an der Vorderseite vorgesehenen, in diesem Fall als Lufteinlass dienenden Luftdurchlass aufweisen, wobei das Gebläse im Bereich der Rückseite angeordnet ist, derart, dass, wenn das Gebläse aktiviert ist, Luft durch den Luftdurchlass einsaugbar, über die Heizeinrichtung führbar und als Warmluft über die Auslässe ausblasbar ist.

Der Luftdurchlass kann in einem oberen Bereich der Vorderseite angeordnet sein, während der an der Vorderseite vorgesehene Auslass in einem unteren Bereich der Vorderseite angeordnet ist. Wie später noch erläutert wird, kann der Luftdurchlass auch als Konvektionsluftauslass genutzt werden, so dass die dann ohne Gebläseunterstützung strömende Luft leicht über den im oberen Bereich der Vorrichtung vorgesehenen Luftdurchlass ausströmen kann.

Es kann eine Verteilerteilereinrichtung vorgesehen sein, zum Verteilen des Warmluftstroms in Luftkanäle zu den Vorderseiten- und Rückseitenauslässen. Auf diese Weise kann die Luft gleichmäßig und bedarfsgerecht im gesamten Caravan verteilt werden.

Die Raumheizvorrichtung kann in einem Gebläsemodus, in dem das Gebläse aktiviert ist, und in einem Konvektionsmodus betrieben werden, in dem das Gebläse keine signifikante Luftströmung bewirkt. Im Gebläsemodus kann auf diese Weise durch das Gebläse ein kräftiger Luftstrom erzeugt und die durch die Heizeinrichtung erwärmte Luft an verschiedene Stellen im Caravan geführt werden. Im Konvektionsmodus hingegen ist das Gebläse abgeschaltet, so dass die Luft durch die Schwerkraftwirkung in die Heizeinrichtung eintritt und aufgrund der Erwärmung aufsteigt.

Der an der Vorderseite vorgesehene Luftdurchlass kann im Konvektionsmodus als Konvektionsluftauslass dienen, um die erwärmte, an der Heizeinrichtung aufsteigende Luft mit geringem Strömungswiderstand ausströmen zu lassen. Daher ist es zweckmäßig, wenn - wie oben bereits angegeben - der Konvektionsluftauslass im oberen Bereich der Vorderseite angeordnet ist.

Als Vorderseite gilt die Front der Raumheizvorrichtung, die dem zu beheizenden Raum zugewandt ist. Demgemäß ist die Rückseite des Raumheizgeräts meist in einem abgeschlossenen Bereich untergebracht, wie z. B. einem Schrank oder einem Kasten.

Der an der Vorderseite vorgesehene Auslass wird nachfolgend als Vorderseitenauslass und der an der Rückseite vorgesehene Auslass als Rückseitenauslass bezeichnet. Selbstverständlich können jeweils mehrere Vorderseitenauslässe oder Rückseitenauslässe vorhanden sein.

Bei einer Ausführungsform kann der Vorderseitenauslass an der Vorderseite seitlich angeordnet sein. Ebenso ist es möglich, dass der Vorderseitenauslass die Warmluft seitlich, also nicht senkrecht zu der Vorderseite der Raumheizvorrichtung bzw. der die Vorrichtung umgebenden Innenwand des Caravans auslässt. Ebenfalls können z. B. zwei Vorderseitenauslässe vorgesehen sein, die symmetrisch an der Vorderseite seitlich angeordnet sind.

Der Luftkanal zu dem Vorderseitenauslass kann absperrbar und/oder hinsichtlich seiner Luftdurchlassmenge veränderbar sein. Auf diese Weise ist es möglich, den Vorderseitenauslass nur bei Bedarf zuzuschalten. Bei Absperrung des Luftkanals wird die Warmluft ausschließlich über die Rückseitenauslässe abgegeben. Zu diesem Zweck ist stromab von dem Gebläse eine Absperreinheit, z. B. eine Stellklappe vorgesehen.

Ebenso ist es möglich, die Luftkanäle zu den Rückseitenauslässen abzusperren oder hinsichtlich ihres Luftdurchlasses einzustellen, um auch die Luftzuführung zu den Rückseitenauslässen beeinflussen zu können.

Die in der Vorrichtung vorgesehene Heizeinrichtung kann in einem Heizungsgehäuse angeordnet sein, welches wiederum in einem Einbauraum, z. B. in einem Schrank in dem Caravan, angeordnet ist. Zwischen wenigstens einem Teil des Heizungsgehäuses, z. B. hinter dessen Rückseite, und dem Einbauraum kann ein Zwischenraum vorgesehen sein. Der belüftete Zwischenraum dient unter anderem zur Entkopplung des meist sehr stark erhitzten Heizungsgehäuses gegenüber der Umgebung und damit der Isolation, um die Umgebung, also den das Heizungsgehäuse umgebenden Einbauraum zu schützen. Der Einbauraum kann einen Einbaukasten aufweisen, wie z. B. aus der DE 100 10 085 A1 bekannt ist.

Das Gebläse kann an einer Rückseite des Heizungsgehäuses in dem Zwischenraum angeordnet sein. Auf diese Weise ist es in einem Bereich untergebracht, der vom Wohnbereich abgelegen ist, so dass eine gewisse Schallisolierung eintritt.

Bei einer Ausführungsform ist im unteren Bereich der Vorderseite eine zu dem Zwischenraum führende Zuluftöffnung vorgesehen, während im oberen Bereich der Vorderseite eine zu dem Zwischenraum führende Abluftöffnung vorgesehen ist. Über die Zuluftöffnung kann Luft aus dem zu beheizenden Raum in den Zwischenraum eintreten und danach über die Abluftöffnung wieder austreten. Auf diese Weise ist eine Kühlung des Zwischenraums möglich, um die von der Heizeinrichtung und dem Heizungsgehäuse abgegebene Wärme abzuführen und die den Einbauraum begrenzenden Wände, die z. B. aus Holz sein können, vor übermäßiger Erhitzung zu schützen.

Der Vorderseitenauslass, über den Warmluft vom Gebläse an der Vorderseite ausgeblasen wird, kann seitlich neben der Zuluftöffnung angeordnet sein.

Zudem kann der Vorderseitenauslass auf gleichem Höhenniveau angeordnet sein wie die Zuluftöffnung.

Ebenso ist es möglich, dass zwei von dem Gebläse gespeiste Vorderseitenauslässe vorgesehen sind, die seitlich neben der Zuluftöffnung angeordnet sind und die Zuluftöffnung zwischen sich einschließen. Durch die Anordnung der Vorderseitenauslässe und der Zuluftöffnung ist gewährleistet, dass möglichst wenig Warmluft aus einem Vorderseitenauslass wieder in die Zuluftöffnung gelangt, was die Kühlwirkung der über die Zuluftöffnung eintretenden Luft beeinträchtigen würde.

Bei einer Ausführungsform ist der Vorderseitenauslass düsenartig ausgebildet. Dadurch wird erreicht, dass die am Vorderseitenauslass austretende Warmluft möglichst weit in den zu erwärmenden Raum transportiert wird.

Bei einer anderen Ausführungsform ist der Vorderseitenauslass in Form eines breiten Schlitzes ausgebildet, was zu niedrigeren Strömungsgeschwindigkeiten führt und ein Zugempfinden der sich im Raum aufhaltenden Personen vermeidet. Dabei kann der Schlitz sich in einer Breite über mehr als die Hälfte der Vorderseite erstrecken, um eine möglichst niedrige Strömungsgeschwindigkeit bei trotzdem hohem Luftdurchsatz zu erreichen.

Bei einer Ausführungsform weist die Heizeinrichtung einen Wärmetauscher mit einem Wärmetauschergehäuse auf, wobei der Luftkanal zwischen dem Gebläse und dem Vorderseitenauslass als Verbindungskanal dient, der sich durch das Wärmetauschergehäuse hindurch erstreckt. Der Verbindungskanal wird demnach nicht an dem Wärmetauschergehäuse vorbei verlegt, sondern durchdringt das Wärmetauschergehäuse. Insbesondere kann der Verbindungskanal eine das Wärmetauschergehäuse durchdringende Öffnung aufweisen. Dabei ist zu beachten, dass das Wärmetauschergehäuse nach wie vor - bis auf den Kaminauslass - vollständig geschlossen ist und keinesfalls Rauchgas aus dem Inneren des Wärmetauschers nach außen in die Umgebung des Wärmetauschers dringen kann. Vielmehr ist das Wärmetauschergehäuse derart ausgeformt, dass es an geeigneter Stelle eine - z. B. sich horizontal erstreckende - Öffnung erlaubt, durch die die Warmluft vom Gebläse aus in Richtung des Vorderseitenauslasses transportiert werden kann. Auf diese Weise wird die Warmluft zusätzlich durch den Wärmetauscher erwärmt.

Der Verbindungskanal kann dabei offene Bereiche aufweisen, derart, dass Luft auf dem Weg zwischen dem Gebläse und dem Vorderseitenauslass teilweise durch die Öffnung im Wärmetauschergehäuse und teilweise entlang der restlichen Außenseite des Wärmetauschergehäuses geführt wird. Die Luft umströmt auf diese Weise sehr effektiv das Wärmetauschergehäuse und kann wirkungsvoll erwärmt werden.

Bei einer Ausführungsform ist die Ausblasrichtung des Gebläses umkehrbar, derart, dass Luft über die Zuluftöffnung und/oder die Abluftöffnung, die jeweils den Zwischenraum zwischen Heizungsgehäuse und Einbauraum mit der Umgebung verbinden, einsaugbar ist. Die Luft wird dann vom Gebläse in das Heizungsgehäuse eingeblasen und an dem Wärmetauscher vorbei geführt. Anschließend ist die Luft über an der Vorderseite vorgesehene Auslässe, insbesondere über den Konvektionsluftauslass ausblasbar.

Die Luft kann stromab von dem Gebläse wenigstens teilweise durch die das Wärmetauschergehäuse durchdringende Öffnung geführt werden.

Diese und weitere Vorteile und Merkmale der Erfindung werden nachfolgend anhand von Beispielen unter Zuhilfenahme der begleitenden Figuren näher erläutert. Es zeigen:
- **Fig. 1**: eine perspektivische Explosionsdarstellung einer erfindungsgemäßen Raumheizvorrichtung;
- **Fig. 2**: eine perspektivische Vorderansicht der Raumheizvorrichtung von Fig. 1;
- **Fig. 3**: eine Schnittdarstellung der Raumheizvorrichtung der Fig. 1 und 2;
- **Fig. 4**: eine Ansicht mit der inneren Oberfläche eines Wärmetauschers und einer Brennereinrichtung;
- **Fig. 5**: eine Rückansicht der Raumheizvorrichtung der Fig. 1 bis 3;
- **Fig. 6**: eine andere Ausführungsform der Raumheizvorrichtung in seitlicher Schnittdarstellung (a), Vorderansicht (b) und Schnittdarstellung von vorne (c);
- **Fig. 7**: eine andere Ausführungsform in Vorderansicht (a) und Draufsicht (b);
- **Fig. 8**: eine weitere Ausführungsform in schematischer Vorderansicht;
- **Fig. 9**: eine andere Ausführungsform in schematischer Vorderansicht;
- **Fig. 10**: eine andere Ausführungsform in Schnittdarstellung (a) und in teilweiser Rückansicht (b) des Wärmetauschergehäuses; und
- **Fig. 11**: eine weitere Ausführungsform in schematischer Schnittdarstellung.

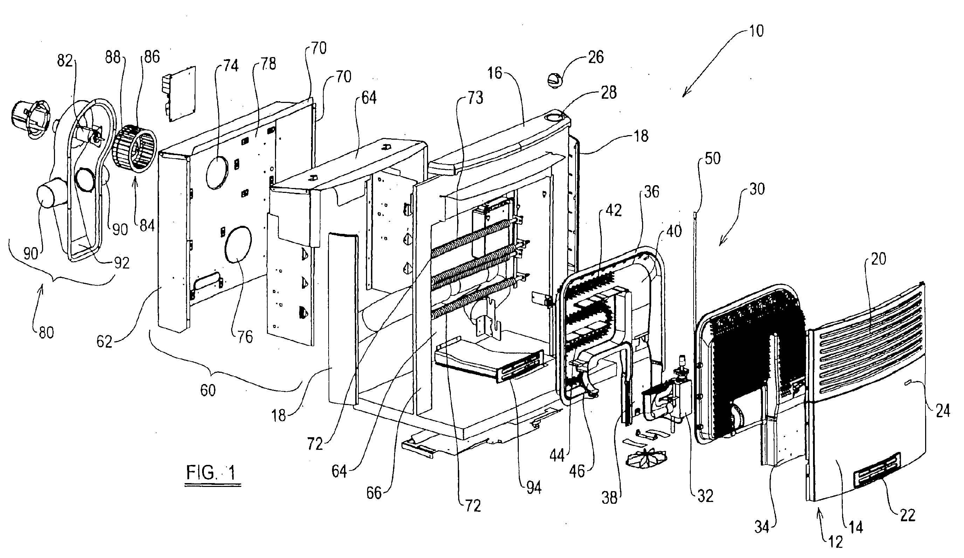

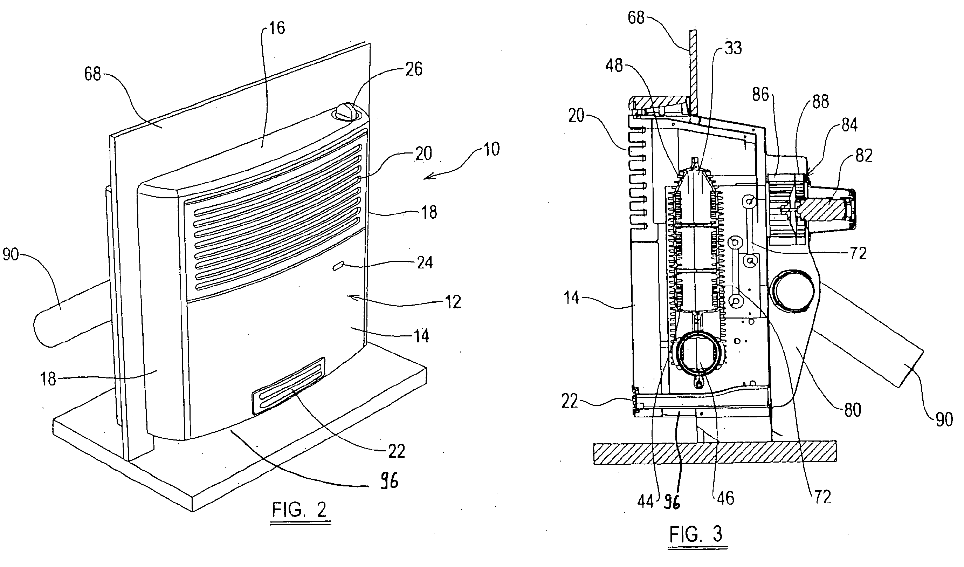

Fig. 1 zeigt in perspektivischer Explosionsdarstellung eine Raumheizvorrichtung für einen Caravan. Die Fig. 2 bis 5 zeigen andere Ansichten und Details der gleichen Raumheizvorrichtung.

Die Raumheizvorrichtung (allgemein mit Bezugszeichen 10 gekennzeichnet) weist ein Vorderteil (allgemein als 12 gekennzeichnet) auf, welches, wenn die Raumheizvorrichtung 10 in einem Caravan eingebaut ist, zur Innenseite, also zum Innenraum hin gerichtet ist und sich von einer in Fig. 2 gezeigten Innenwand 68 des Caravans weg erstreckt. Ein Gehäuse 60 ist hinter dem Vorderteil 12 angeordnet und nimmt eine Heizeinrichtung 30 mit einem Gasbrenner und einem Wärmetauscher sowie zwei elektrische Heizelemente 72 auf. Auf der Rückseite des Gehäuses 60 ist eine Gebläse- und Verteilereinrichtung 80 angebracht.

Fig. 2 zeigt den Vorderteil 12 der Raumheizvorrichtung 10 von Fig. 1 in größerem Detail. Der Vorderteil 12 weist eine Frontverkleidung 14, eine Oberseitenverkleidung 16 und zwei Seitenverkleidungen 18 auf. Die Frontverkleidung 14 weist einen durch Lamellen gebildeten oberen Luftdurchlass 20 auf, durch den Luft in das Innere der Raumheizvorrichtung 10 eintreten oder daraus austreten kann, sowie einen als Vorderseitenauslass dienenden unteren Luftauslass 22. Der untere Luftauslass 22 muss nicht an der in den Figuren gezeigten Stelle platziert sein. So kann bei anderen Ausführungsformen der Luftauslass 22 auch weiter oben auf der Frontverkleidung 14 oder in einer oder beiden Seitenverkleidungen 18 vorgesehen sein. Bei jeder dieser Ausführungsformen ist aber der Luftauslass 22 am Vorderteil 12 und damit an der Vorderseite der Heizvorrichtung vorgesehen.

Unterhalb von dem oberen Luftdurchlass 20 ist ein Kontrollfenster 24 angeordnet, das es dem Benutzer durch Überwachen einer Pilot-Flamme in der Heizvorrichtung ermöglicht, zu überprüfen, ob ein Gasbrenner 32 aktiviert ist. Ein Gassteuerungsknopf 26 ist in einer Vertiefung 28 der Oberseitenverkleidung 16 eingesetzt und dient zum Steuern der Gaszufuhr zu dem Gasbrenner 32.

Gemäß Fig. 1 weist die Heizeinrichtung 30 einen Gasbrenner 32 mit so genanntem Niedrig-Profilaufbau auf, so dass er sich im Einbauzustand nicht nach unten in den Fahrzeugboden erstreckt. Die verminderte Höhe erlaubt Vorteile beim Einbau. Bei bestimmten Geräten aus dem Stand der Technik erstreckt sich die Brennereinrichtung weit in den Fahrzeugboden hinein, was zu Problemen führen kann, wenn die Heizeinrichtung direkt über einer Fahrzeugachse des Caravans angeordnet ist.

Die Heizeinrichtung 30 weist weiterhin einen Wärmetauscher 33 mit einem Vorder- und einem Rückteil 34, 36 auf. Vorder- und Rückteil 34, 36 sind aus Aluminiumguss hergestellt und werden durch Federstahlelemente, z. B. C-förmige Clips, zusammengehalten. Die C-förmigen Clips klemmen die beiden Teile 34, 36 in gasdichter Weise zusammen.

Vorder- und Rückteil 34, 36 des Wärmetauscher 33 können selbstverständlich auch aus anderen Wärme-leitenden Materialien hergestellt sein oder auf andere Weise miteinander verbunden werden, wie z. B. mit Nieten. Ebenso kann der Wärmetauscher 33 aus einem Stück gefertigt werden.

Der Gasbrenner 32 ist in einem unteren Bereich 38 des Wärmetauschers 33 angeordnet, wobei eine Gaszufuhr zu dem Gasbrenner 32 mit Hilfe des Gassteuerungsknopfs 26 über einen mit dem Knopf 26 und dem Brenner 32 verbundenen Gasteuerungsstab 50 (vgl. Fig. 1) gesteuert wird, so dass der Bediener der Heizvorrichtung die Gaszufuhr des Gasbrenners 32 an- oder abstellen kann.

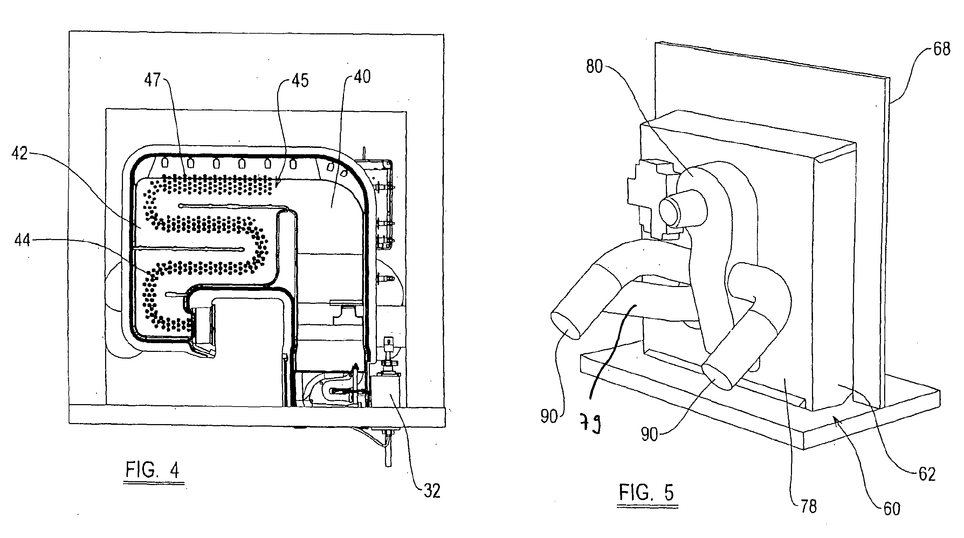

Direkt oberhalb des Gasbrenners 32 ist ein Kaminabschnitt 40 des Wärmetauschers 33 angeordnet, der die Verbrennungsprodukte von dem Gasbrenner 32 in einen serpentinenförmigen Wärmetauschabschnitt 42 führt. Der Wärmetauschabschnitt 42 weist eine Mehrzahl von inneren Wärmeübertragungszapfen 44 auf und mündet in einen Abgasauslass 46. Die inneren Wärmeübertragungszapfen 44 sind jeweils 8 mm lang und auf den Innenseiten sowohl des Vorder- als auch des Rückteils 34, 36 angeordnet. Sie erstrecken sich ungefähr über ein Drittel der Tiefe der jeweiligen Teile 34, 36 nach innen, wie in Fig. 3 gezeigt. Die Wärmeübertragungszapfen 44 sind in einer gestreckten, etwa S-förmigen Weise angeordnet, in Form von sich aufwärts erstreckenden Reihen 45, wobei jede Reihe 45 gegenüber benachbarten Reihen einen Querversatz aufweist, so dass die oberen Zapfen 47 von jeder Reihe eine Zickzackform bilden, wie in Fig. 4 gezeigt. Die Anordnung der Zapfen 44 erleichtert die Wärmeübertragung von den Verbrennungsprodukten auf den Wärmetauscher 33, da die Zapfen 44 eine große Oberfläche für den Wärmeübergang bilden. Außerdem wird ein Serpentinenweg für die Verbrennungsprodukte gebildet, wodurch Turbulenzen in den Verbrennungsprodukten bewirkt werden, die einen häufigen Kontakt der Verbrennungsprodukte mit den Wärmeübertragungszapfen 44 fördern und so Wärme auf die Zapfen 44 übertragen. Dies führt zu einem verbesserten Wärmeübergang und zu einem Absenken der Temperatur der Verbrennungsprodukte an dem Abgasauslass 46, wodurch die Gesamtkosten der Heizeinrichtung 10 gesenkt werden können, da weniger anspruchsvolle (wärmebeständige) Materialien verwendet werden können.

Eine Mehrzahl von Wärmeübertragungszapfen 48 ist auch auf der Außenseite des Vorderteils 34 und des Rückteils 36 vorgesehen, wie in Fig.1 gezeigt, um den Wärmeübergang von dem Wärmetauscher 33 zu der diesen umgebenden Luft zu verbessern. Die Wärmeübertragungszapfen 48 arbeiten im umgekehrten Sinne wie die inneren Zapfen 44, wobei die Wärme von den Zapfen 48 auf die umgebende Luft abgegeben wird.

Die Heizeinrichtung 30 ist in einem allgemein in den Fig. 1 und 5 mit dem Bezugszeichen 60 gekennzeichneten Gehäuse angeordnet, mit einem Einbaukasten 62 und einer inneren Einbaukammer 64. Wenn die Heizeinrichtung 10 in einen Caravan eingebaut ist, befindet sich der Einbaukasten 62 hinter einem Ausschnitt 66 in der Innenwand 68. Flansche 70, die sich an der Oberkante und an den Seitenkanten des Einbaukastens 62 erstrecken, kontaktieren die Wand 68, um den Einbaukasten 62 in Position zu halten. Die innere Einbaukammer 64 ist in den Einbaukasten 62 eingesetzt und umgibt die Heizeinrichtung 30 sowie die beiden elektrischen Heizelemente 72, die zwischen dem Einbaukasten 62 und dem Rückteil 36 des Wärmetauschers 63 angeordnet sind. Jedes der elektrischen Heizelemente 72 weist eine Mehrzahl von Wärmetauscherrippen 73 auf, die den Wärmeübergang von den Heizelementen 72 zu der umgebenden Luft vergrößern.

In einer Rückwand 78 des Einbaukastens 62 sind eine Luftauslassöffnung 74 und eine Abgasauslassöffnung 76 vorgesehen. Ein mit dem Abgasauslass 46 des Wärmetauschers 33 verbundenes Abgasrohr 79 erstreckt sich durch die Abgasauslassöffnung 76, um die Verbrennungsprodukte nach außen, außerhalb des Caravans zu führen.

Auf der Rückseite der Rückwand 78 des Einbaukastens 62 ist eine Gebläse- und Verteilereinrichtung 80 vorgesehen, mit einem Gebläse, das einen Elektromotor 82 (z. B. mit 12 V Gleichstrom) aufweist, der einen geteilten Lüfter 84 antreibt. Der geteilte Lüfter 84 ist in der Nähe der Luftauslassöffnung 74 angeordnet und weist einen vorderen Teil 86 und einen hinteren Teil 88 auf.

Die Heizvorrichtung 10 kann entweder in einem Gebläsemodus oder in einem Konvektionsmodus betrieben werden. In dem Gebläsemodus ist der Elektromotor 82 aktiviert, so dass der vordere Teil 86 des geteilten Lüfters 84 Luft von der Umgebung der Heizvorrichtung (z. B. aus dem Inneren des Caravans) über den in der Frontverkleidung 14 vorgesehenen oberen Luftdurchlass 20 einsaugt, so dass die Luft erwärmt wird, wenn sie über den Wärmetauscher 33 und die elektrischen Heizelemente 72 geführt wird. Die Warmluft wird durch die Luftauslassöffnung 74 abgezogen, wobei ein Teil der Luft durch Seitenauslässe 90, die in der Gebläse- und Verteilereinrichtung 80 vorgesehen sind, geführt werden, um so in dem Caravan verteilt zu werden. Ein anderer Teil der Luft wird durch einen unteren Bereich 92 der Gebläse- und Verteilereinrichtung 80 sowie durch einen Vorderseitenluftauslass 94 abgezweigt, so dass Warmluft durch den unteren Luftauslass 22 in der Frontverkleidung 14 in das Innere des Caravans ausgeblasen wird.

Auf diese Weise kann der Wohnbereich, in dem die Heizvorrichtung 10 eingebaut ist, direkt, also ohne die Notwendigkeit einer Leitung zum Führen der Warmluft, erwärmt werden. Die Warmluft verliert somit kaum an Temperatur, was ansonsten der Fall wäre, wenn die Luft über längere Leitungen zu anderweitig angeordneten Luftauslässen geführt werden müsste.

Darüber hinaus erhöht diese Einrichtung die Sicherheit, da in dem Fall, wenn die Luftführungen oder Auslässe aus irgendeinem Grund blockiert sind, die erwärmte Luft immer noch durch den Vorderseitenauslass 22 austreten kann.

Wenn der Elektromotor 82 aktiviert wird, zieht der hintere Teil 88 des geteilten Lüfters 84 im Wesentlichen kühle Luft aus dem Bereich hinter der Heizvorrichtung 10 über den Elektromotor 82, um ihn zu kühlen und so die Gefahr einer Überhitzung zu mindern. Die auf diese Weise geförderte Luft beträgt etwa 20 % der vom Lüfter 84 insgesamt geförderten Luft, während die verbleibenden 80 % Warmluft ist, die durch den oberen Luftdurchlass 20 in der Frontverkleidung 14, über den Wärmetauscher 33 und über die Heizelemente 72 gezogen worden ist.

Im Konvektionsmodus ist der Elektromotors 82 nicht aktiviert. Die Luft wird einfach durch den Wärmetauscher 33 oder durch eines oder beide der Heizelemente 72 oder durch eine Kombination von Wärmetauscher 33 und Heizelement(en) 72 erwärmt, wobei die Warmluft über den oberen Luftdurchlass 20 (hier: Konvektionsluftauslass) entweicht, um das Innere des Caravans zu erwärmen.

Sowohl im Gebläsemodus als auch im Konvektionsmodus sind der Gasbrenner 32 und die elektrischen Heizelemente 72 unabhängig voneinander betreibbar. Mit anderen Worten kann die Heizvorrichtung in einem "Nur-Gas"-Modus betrieben werden, bei dem lediglich der Gasbrenner 32 genutzt wird, aber auch in einem "Nur-Elektro"-Modus, bei dem ein oder beide Heizelemente 72 eingesetzt werden, oder in einem "Kombinations"-Modus, in dem der Gasbrenner 32 und eines oder beide der elektrischen Heizelemente 72 eingesetzt werden.

Das Vorderteil 12 ist an seiner Unterseite offen, so dass durch den Lüfter 84 Luft nicht nur über den oberen Luftdurchlass 20, sondern auch über einen unteren Luftdurchlass 96 in das Innere der Heizeinrichtung 30 und an dem Wärmetauscher 33 vorbeigeführt werden kann.

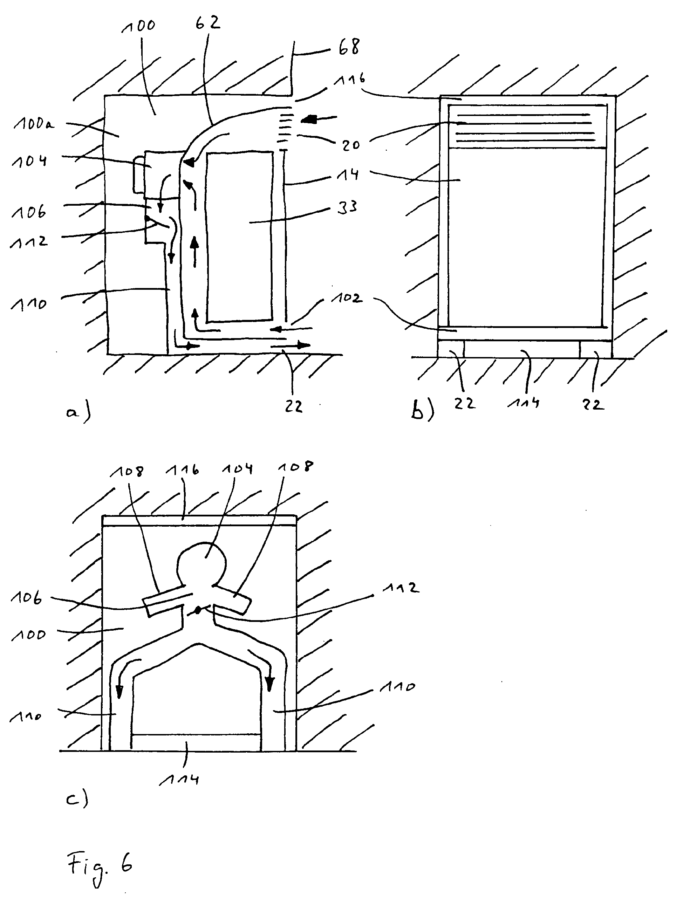

Fig. 6 zeigt eine andere Ausführungsform der Raumheizvorrichtung, wobei in Fig. 6a eine seitliche Schnittansicht, in Fig. 6b eine Vorderansicht und in Fig. 6c eine Rückansicht dargestellt ist.

Sofern Bauelemente die gleiche Funktion haben wie bei der in den Fig. 1 bis 5 gezeigten Raumheizvorrichtung, werden sie mit gleichen Bezugszeichen gekennzeichnet.

Fig. 6a zeigt den Einbaukasten 62, der in einem Einbauraum 100, z. B. im Inneren eines Schranks in dem Caravan, eingebaut ist. Der Schrank kann durch die Innenwand 68 abgeschlossen sein. An der Vorderseite ist in oder unterhalb der Frontverkleidung 14 ein unterer Luftdurchlass 102 ausgebildet. Wie die Pfeile zeigen, kann durch ein an der Rückseite der Heizvorrichtung vorgesehenes Gebläse 104 Luft über den unteren Luftdurchlass 102 und über den lamellenartig gestalteten oberen Luftdurchlass 20 eingezogen werden. Wenigstens ein Teil der Luft wird an dem Wärmetauscher 33 im Inneren der Heizvorrichtung vorbeigeführt und dadurch erwärmt.

Die erwärmte Luft wird durch das Gebläse 104 zu einer Verteilereinrichtung 106 und von dort zu verschiedenen Warmluftauslässen geführt.

An der Verteilereinrichtung 106 sind Rohranschlüsse 108 vorgesehen, an denen Rohrleitungen befestigt werden können, mit denen die Warmluft zu verschiedenen Stellen innerhalb des Caravans geführt wird. Die Rohranschlüsse 108 entsprechen im Prinzip den Seitenauslässen 90 der oben beschriebenen Ausführungsform.

Von der Verteilereinrichtung 106 gehen weiterhin zwei Luftkanäle 110 ab, die zu zwei als Vorderseitenauslass dienenden unteren Luftauslässen 22 führen. Die Warmluft wird somit an zwei Stellen der Raumheizvorrichtung direkt nach vorne in den zu beheizenden Raum ausgegeben.

Die Menge an Warmluft, die direkt über die Vorderseitenauslässe 22 ausgegeben wird, kann über eine in der Verteilereinrichtung 106 vorgesehene Stelleinrichtung, z. B. eine Stellklappe 112 variiert, d. h. eingestellt bzw. ganz blockiert werden. Die Stellklappe 112 kann von dem Bediener von außen verstellt werden, um die Luftmenge, die nicht über die Rohranschlüsse 108 in das Rohrleitungssystem, sondern direkt über die Vorderseitenauslässe 22 abgegeben wird, einstellen zu können. Selbstverständlich sind statt der Stellklappe 112 auch andere Stelleinrichtungen möglich.

Zwischen den beiden insbesondere in Fig. 6b gezeigten Vorderseitenauslässen 22 ist eine Zuluftöffnung 114 vorgesehen, über die Luft von außen in den Einbauraum 100 hinter der Heizvorrichtung, insbesondere in einen zwischen dem Einbaukasten 62 und dem Einbauraum 100 vorgesehenen Zwischenraum 100a gelangen kann. Dort dient diese Luft zur Kühlung des Einbauraums 100 und kann über eine im oberen Bereich vorgesehene Abluftöffnung 116 wieder entweichen. Die Zuluftöffnung 114 ist in dem gezeigten Beispiel direkt unter dem unteren Luftdurchlass 102 angeordnet. Sie wird links und rechts jeweils von einem Vorderseitenauslass 22 flankiert, so dass die Vorderseitenauslässe 22 und die Zuluftöffnung 114 auf einem Niveau liegen.

Die Fig. 7 bis 9 zeigen verschiedene Varianten für Gestaltungsmöglichkeiten des Vorderseitenauslasses 22.

In Fig. 7a sind zwei Vorderseitenauslässe 22 symmetrisch links und rechts seitlich in der Frontverkleidung 14 vorgesehen. Die Vorderseitenauslässe 22 schließen den oberen Luftdurchlass 20 symmetrisch ein, wie auch die Draufsicht in Fig. 7b zeigt, in der die Luftströmung durch Pfeile dargestellt ist.

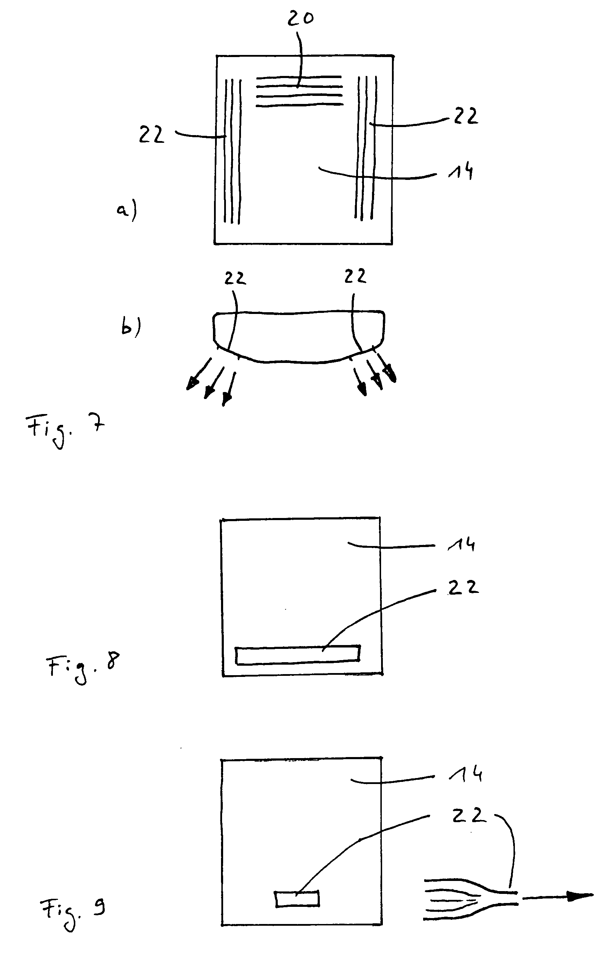

In Fig. 8 ist der Vorderseitenauslass 22 - im Vergleich zu der Ausführungsform von Fig. 2 - erheblich breiter dargestellt und überstreicht mehr als die Hälfte der Gesamtbreite der Frontverkleidung 14.

In Fig. 9 ist der Vorderseitenauslass 22 düsenförmig (siehe Nebenskizze in Fig. 9) ausgebildet und erlaubt einen gewissen "Weitwurf"-Effekt, bei dem der Warmluftstrahl besonders weit in den zu erwärmenden Raum hineinreicht.

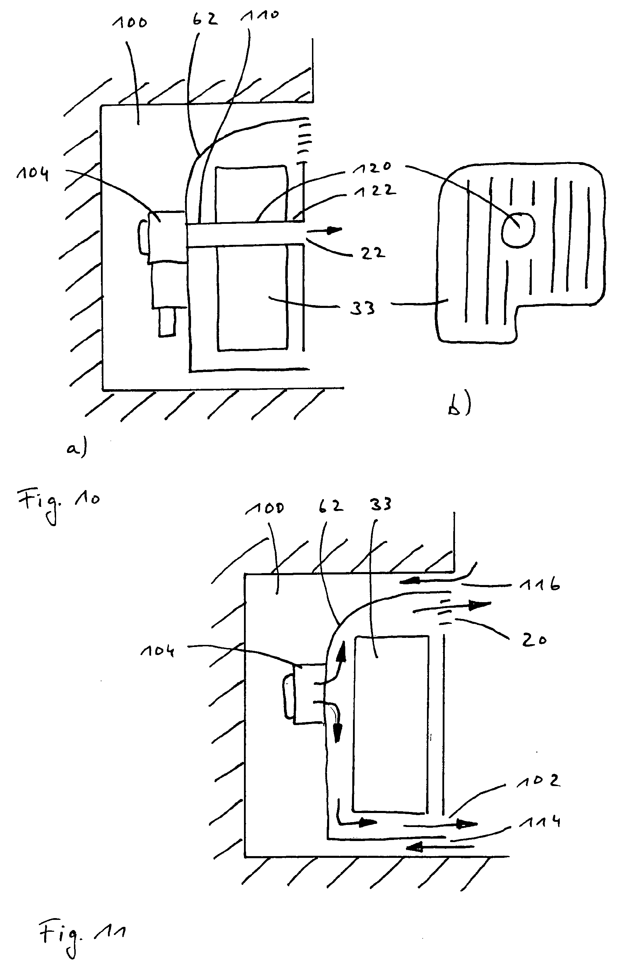

Fig. 10 zeigt eine weitere Ausführungsform der Raumheizvorrichtung, bei der die Warmluft von dem Gebläse 104 zu dem Vorderseitenauslass 22 direkt durch eine Öffnung 120 in dem Wärmetauscher 33 geführt wird.

Zu diesem Zweck ist in dem Wärmetauscher 33 die Durchgangsöffnung 120 ausgebildet. Die bereits vorher erwärmte Luft, aber auch kühle Luft aus der Umgebung, z. B. dem Einbauraum 100, wird von dem Gebläse 104 über einen Luftkanal 122 durch die Öffnung 120 zu dem Vorderseitenauslass 22 transportiert.

Bei einer Variante kann der Luftkanal 122 weggelassen werden, so dass die Luft frei in den Raum um den Wärmetauscher 33 einströmt und nach Belieben um den Wärmetauscher 33 herum, aber auch direkt durch die Öffnung 120 zu dem Vorderseitenauslass 22 gelangt.

Fig. 11 zeigt eine weitere Ausführungsform der Raumheizvorrichtung, bei der die Blasrichtung des Gebläses 104 umgekehrt ist. Das bedeutet, dass die Umgebungsluft über die Zuluftöffnung 114, aber auch durch die an der Oberseite vorgesehene Abluftöffnung 116 in den Einbauraum 100 eingesaugt und durch den Lüfter 104 in das Innere des Einbaukastens 62 eingeblasen wird. Dabei umströmt die Luft den Wärmetauscher 33 und wird so erwärmt. Die erwärmte Luft kann dann über den oberen Luftdurchlass 20 und über den unteren Luftdurchlass 102 in den zu erwärmenden Raum direkt austreten. Der obere Luftdurchlass 20 und der untere Luftdurchlass 102 dienen dann als Vorderseitenauslässe.

## Patentansprüche

1. Raumheizvorrichtung für einen Caravan, mit einer Heizeinrichtung (30) und einem Gebläse (80; 104), wobei das Gebläse (80; 104) zum Ausblasen von Warmluft durch Auslässe (22, 90; 108) dient, die an der Vorderseite (12) und an der Rückseite der Raumheizvorrichtung vorgesehen sind.

2. Raumheizvorrichtung nach Anspruch 1, **gekennzeichnet durch** einen an der Vorderseite (12) vorgesehenen Luftdurchlass (20, 96), wobei das Gebläse (80; 104) im Bereich der Rückseite angeordnet ist, derart, dass, wenn das Gebläse (80; 104) aktiviert ist, Luft **durch** den Luftdurchlass (20, 96) einsaugbar, über die Heizeinrichtung (30) führbar und als Warmluft über die Auslässe (22, 90) ausblasbar ist.

3. Raumheizvorrichtung nach Anspruch 1 oder 2, **dadurch gekennzeichnet, dass**
- der Luftdurchlass (20) in einem oberen Bereich der Vorderseite (12) angeordnet ist; und dass
- der an der Vorderseite (12) vorgesehene Auslass (22) in einem unteren Bereich der Vorderseite (12) angeordnet ist.

4. Raumheizvorrichtung nach einem der Ansprüche 1 bis 3, **dadurch gekennzeichnet, dass** eine Verteilereinrichtung (80; 106) vorgesehen ist, zum Teilen des Warmluftstroms in Luftkanäle zu den Vorderseiten- und Rückseitenauslässen (22, 90; 108).

5. Raumheizvorrichtung nach einem der Ansprüche 1 bis 4, **dadurch gekennzeichnet, dass** die Raumheizvorrichtung in einem Gebläsemodus, in dem das Gebläse (80; 104) aktiviert ist, und in einem Konvektionsmodus betreibbar ist, in dem das Gebläse (80; 104) keine signifikante Luftströmung bewirkt.

6. Raumheizvorrichtung nach Anspruch 5, **dadurch gekennzeichnet, dass** der an der Vorderseite (12) vorgesehene Luftdurchlass (20) im Konvektionsmodus als Konvektionsluftauslass dient.

7. Raumheizvorrichtung nach einem der Ansprüche 1 bis 6, **dadurch gekennzeichnet, dass** wenigstens ein an der Vorderseite (12) vorgesehener Auslass als Vorderseitenauslass (22) vorgesehen ist und dass wenigstens ein an der Rückseite vorgesehener Auslass ein Rückseitenauslass (90; 108) ist.

8. Raumheizvorrichtung nach Anspruch 7, **dadurch gekennzeichnet, dass** der Vorderseitenauslass (22) an der Vorderseite (12) seitlich angeordnet ist.

9. Raumheizvorrichtung nach Anspruch 7 oder 8, **dadurch gekennzeichnet, dass** der Luftkanal (110) zu dem Vorderseitenauslass (22) absperrbar und/oder hinsichtlich seiner Luftdurchlassmenge veränderbar ist.

10. Raumheizvorrichtung nach einem der Ansprüche 1 bis 9, **dadurch gekennzeichnet, dass**
- die Heizeinrichtung (30) in einem Heizungsgehäuse (60) angeordnet ist;
- das Heizungsgehäuse (60) in einem Einbauraum (100) angeordnet ist;
- zwischen wenigstens einem Teil des Heizungsgehäuses (60) und dem Einbauraum (100) ein Zwischenraum (100a) vorgesehen ist.

11. Raumheizvorrichtung nach Anspruch 10, **dadurch gekennzeichnet, dass** das Gebläse (80; 104) an einer Rückseite des Heizungsgehäuses (60) in dem Zwischenraum (100a) angeordnet ist.

12. Raumheizvorrichtung nach Anspruch 10 oder 11, **dadurch gekennzeichnet, dass**
- im unteren Bereich der Vorderseite (12) eine zu dem Zwischenraum (100a) führende Zuluftöffnung (114) vorgesehen ist;
- im oberen Bereich der Vorderseite (12) eine zu dem Zwischenraum (100a) führende Abluftöffnung (116) vorgesehen ist.

13. Raumheizvorrichtung nach Anspruch 12, **dadurch gekennzeichnet, dass** der Vorderseitenauslass (22) an der Vorderseite (12) seitlich neben der Zuluftöffnung (114) angeordnet ist.

14. Raumheizvorrichtung nach Anspruch 12 oder 13, **dadurch gekennzeichnet, dass** der Vorderseitenauslass (22) auf gleichem Höhenniveau angeordnet ist wie die Zuluftöffnung (114).

15. Raumheizvorrichtung nach einem der Ansprüche 12 bis 14, **dadurch gekennzeichnet, dass** zwei von dem Gebläse (104) gespeiste Vorderseitenauslässe (22) vorgesehen sind, die seitlich neben der Zuluftöffnung (114) angeordnet sind und die die Zuluftöffnung (114) zwischen sich einschließen.

16. Raumheizvorrichtung nach einem der Ansprüche 1 bis 15, **dadurch gekennzeichnet, dass** der Vorderseitenauslass (22) düsenartig ausgebildet ist.

17. Raumheizvorrichtung nach einem der Ansprüche 1 bis 16, **dadurch gekennzeichnet, dass** der Vorderseitenauslass (22) in Form eines Schlitzes ausgebildet ist, der sich in der Breite über mehr als die Hälfte der Vorderseite (12) erstreckt.

18. Raumheizvorrichtung nach einem der Ansprüche 1 bis 17, **dadurch gekennzeichnet, dass**
- die Heizeinrichtung (30) einen Wärmetauscher (33) mit einem Wärmetauschergehäuse (34, 36) aufweist;
- der Luftkanal zwischen dem Gebläse (104) und dem Vorderseitenauslass (22) ein Verbindungskanal (110) ist; und dass
- dass sich der Verbindungskanal (110) durch das Wärmetauschergehäuse (34, 36) hindurch erstreckt.

19. Raumheizvorrichtung nach Anspruch 18, **dadurch gekennzeichnet, dass** der Verbindungskanal (110) eine das Wärmetauschergehäuse (34, 36) durchdringende Öffnung (120) ausweist.

20. Raumheizvorrichtung nach Anspruch 18 oder 19, **dadurch gekennzeichnet, dass** der Verbindungskanal (110) offene Bereiche aufweist, derart, dass Luft auf dem Weg zwischen dem Gebläse (104) und dem Vorderseitenauslass (22) teilweise durch die Öffnung (120) und teilweise entlang der Außenseite des Wärmetauschergehäuses (34, 36) geführt wird.

21. Raumheizvorrichtung nach einem der Ansprüche 1 bis 20, **dadurch gekennzeichnet, dass** die Ausblasrichtung des Gebläses (104) umkehrbar ist, derart, dass Luft über die Zuluftöffnung (114) und/oder die Abluftöffnung (116) einsaugbar, in das Heizungsgehäuse (62) und an dem Wärmetauscher (33) vorbeiführbar sowie über an der Vorderseite (12) vorgesehene Auslässe, insbesondere über den Konvektionsluftauslass (20) ausblasbar ist.

22. Raumheizvorrichtung nach einem der Ansprüche 19 bis 21, **dadurch gekennzeichnet, dass** die Luft stromab von dem Gebläse (104) wenigstens teilweise durch die das Wärmetauschergehäuse (34, 36) durchdringende Öffnung (120) geführt wird.
